# EUROPEAN PATENT SPECIFICATION

(11) **EP 3 817 934 B1**
(45) Date of publication and mention of the grant of the patent: **06.03.2024**
(21) Application number: 19740271.2
(22) Date of filing: 28.06.2019
(51) Int. Cl.: B60H 1/34, F24F 13/12, F24F 13/15

(54) **AIR VENT FOR A VEHICLE**
LUFTAUSSTRÖMER FÜR EIN FAHRZEUG
DIFFUSEUR D'AIR POUR UN VÉHICULE

(30) Priority: 02.07.2018 DE 102018115944
(43) Date of publication of application: 12.05.2021
(60) Divisional application: 23201918.2
(73) Proprietor: Illinois Tool Works INC., Glenview, IL 60025 (US)
(72) Inventor: DEMERATH, Michael, Glenview, IL 60025 (US)
(74) Representative: Meissner Bolte Partnerschaft mbB
(86) International application number: PCT/US2019/039690
(87) International publication number: WO 2020/009910

(56) References cited:
- DE-A1- 3 001 163
- JP-A- S62 228 833
- JP-A- 2007 196 942
- JP-A- 2015 161 440
- JP-A- 2017 088 109
- US-A1- 2014 302 769

## Description

The invention relates to an air vent for a vehicle, comprising a housing with an inlet opening and an outlet opening, wherein a housing wall of the housing delimits an air duct for air flowing from the inlet opening to the outlet opening along a main flow direction, furthermore comprising at least one air guide element arranged in the air duct upstream of the outlet opening.

### BACKGROUND

Such air vents serve for supplying in particular fresh air into a vehicle interior. Here, the air flows via the inlet opening into the air duct delimited by the housing wall, passes through the same and finally flows through the outlet opening into the interior of a vehicle, for example a car or commercial vehicle. In doing so, the air flow generally follows a main flow direction, which can extend in particular parallel to a longitudinal axis of the housing. A deflection of the air flow from the main flow direction in the case of known air vents is effected by one or more air guide elements, for example pivotable air guide slats. Besides the air guide elements, the housing delimiting the air duct can also serve for deflecting the air from the main flow direction.

Accordingly, air slats are known, the housing walls of which converge in an arc-like/manner, wherein an air flow directed to the arc-like housing wall by an air guide element follows the arc shape and is thus subjected to a corresponding deflection. Such air vents are known for example from DE 20 2015 102 026 U1, DE 20 2013 012 285 U1 and DE 10 2017 111 011 A1. Because of the arc-shaped design of the housing wall, such air vents are quite expensive to produce, however, in particular by way of the plastic injection moulding method.

The document JP S62 228833 A relates to an air vent for a vehicle, comprising a housing with an inlet opening and an outlet opening, a housing wall of the housing delimiting an air duct for air flowing from the inlet opening to the outlet opening along a main flow direction. The air vent further comprises at least one air guide element arranged in the air duct upstream of the outlet opening.

JP 2007196942 A also relates to such an air vent for a vehicle.

US 2014/302769 A1 relates to an air vent having a narrow and long air outlet.

The document JP 2017088109 A relates to an air vent for a vehicle.

The documents DE 30 01 163 A1 and JP 2015161440 A also relate to air vents.

### SUMMARY

Starting out from the explained prior art, the invention is based on the object of providing an air vent for a vehicle, of the type mentioned at the outset, which with simple production ensures an adequate air deflection.

The invention solves the object through the subject matter of independent claim 1. Advantageous configurations of the invention are subject of the dependent claims.

For an air vent of the type mentioned at the outset, the invention solves the object in that the housing wall in the region of the outlet opening forms at least one projection projecting into the air duct at an angle, so that the cross-sectional area of the air duct decreases in the main flow direction, wherein the at least one air guide element is adjustable between two end settings and designed in order to direct the air flowing through the air duct from the main flow direction in the direction of the at least one projection at least in one of the end positions.

According to the invention, the housing wall delimiting the air duct thus does not extend in an arc-shaped manner but at an angle. Accordingly, the housing wall comprises at least one corner. In other words, the at least one projection forms a first part of the housing wall, which is arranged at an angle relative to a second part of the housing wall adjoining the first part upstream. Here, the at least one projection projects into the air duct in such a manner that the cross-sectional area of the air duct decreases in the main flow direction. The at least one air guide element is adjustably arranged in the air duct so that by suitably positioning the air guide element the air flowing through the air duct can be directed from the main flow direction towards the projection. Here, the at least one air guide element can deflect the air flow from the main flow direction in particular in a direction that is perpendicular to the main flow direction, i.e. impart to the air flow a directional component in a direction that is perpendicular to the main flow direction. By way of this, the air flow can be directed towards the projection. Then, the housing wall forming the projection in turn deflects the air flow in another direction. The inventors have realized here that a housing wall having such a projection also makes possible a reliable air deflection - similar to the air deflection effected by an arc-shaped housing wall. The reason for this is that an air cushion consisting of one or more air vortices is created in the projection formed by the housing wall. Because of the air cushion forming in the projection, the air flow directed in the direction of the projection by the at least one air guide element is similarly guided as when striking an arc-shaped housing wall, but a larger deflection angle of the outflowing air is achieved by way of the projection according to the invention. Consequently, the air vent according to the invention deflects the air flowing through the air duct more effectively. However, an air vent with a projection according to the invention is easier to produce since no curvature has to be formed in the housing. Especially during the production by injection moulding, in particular by plastic injection moulding, a production of the housing of the air vent can, in the simplest case, be effected even with a single injection mould. Even if a production takes place with multiple injection moulds the joining of the housing parts so created is at least simpler since no arc-shaped housing wall has to be formed.

By way of the housing wall forming a projection, the housing wall extends step-wise. The housing wall, in particular, can comprise multiple such consecutive projections. Thus, the housing wall can extend step-wise. The at least one projection can in particular extend over the entire length of the outlet opening. The air vent can be in particular an elongated air vent, i.e. the housing of the air vent can be longer than high. In particular, the outlet opening can be an elongated outlet opening, i.e. can have a greater length than a height. Here, the at least one air guide element can extend through the air duct in particular along the entire length of the air vent. In a state installed in a vehicle, the length of the air vent or of the outlet opening can extend in particular along the horizontal, wherein the height extends along the vertical. The air guide element can in particular be an air guide slat. In particular, multiple, for example two projections formed on mutually opposite housing walls can be provided. The cross-sectional area of the air duct can thus decrease from two mutually opposite sides in the main flow direction. The at least one air guide element can then be designed in particular for directing, in a first end position, the air flowing through the air duct from the main flow direction in a direction of a first of the two projections and in a second end position, directing the air flowing through the air duct from the main flow direction in the direction of a second of the two projections. Obviously, the at least one air guide element can also be adjusted in any intermediate position between the two end positions, wherein the air flow then forms two part flows flowing along the air guide element on both sides. Each position of the guide element can bring about a different outlet angle of the air flow out of the outlet opening.

According to the invention, the at least one projection projects into the air duct at an angle of 40° to 120°, preferably 60° to 100°, particularly preferably 90°. The projection thus forms a part of the housing wall which, with a part of the housing wall adjoining upstream, includes an angle of 40° to 120°, preferably 60° to 100°, particularly preferably 90°. In the case of an angle smaller than 90°, the projection accordingly projects into the air duct against the main flow direction and in the case of an angle greater than 90° in the main flow direction. In the mentioned angular range, a particularly reliable and stable formation of flow vortices takes place in the projection. This applies in particular to the angular value of 90°.

According to a configuration, the air duct has a rectangular cross-sectional area, wherein mutually opposite housing walls delimiting the air duct each form a projection in the area of the outlet opening projecting into the air duct at the previously defined angle. Consequently, the housing can be rectangular in design. As already mentioned at the outset, multiple projections can be provided. With this configuration, at least two housing walls located mutually opposite one another each have a projection projecting into the air duct at an angle in the region of the outlet opening. Thus, the air duct can narrow along the main flow direction from two mutually opposite sides. The at least one air guide element can be designed for directing the air flowing through the air duct from the main flow direction in the direction in each case of one of the projections in both end positions, as likewise mentioned at the outset. In a state of the air vent installed in the vehicle, a reliable air deflection can thereby be effected by the housing in two mutually opposite directions for example upwards and downwards. Obviously, the outlet angle of the air flow out of the outlet opening here can also be changed as desired by positioning the at least one air guide element between the two end positions.

According to a configuration, the at least one projection is formed by a baffle delimiting the outlet opening. In the state of the air vent installed in the vehicle, such a baffle serves for closing the air vent in the direction of the vehicle interior. The baffle can be fitted or inserted for example on/in a housing base body or connected to the same in another way. Here, the projection can be formed by baffle sections extending away from one another at an angle. The at least one projection can also be formed by arranging the baffle on the housing base body. The projection or the angle included between baffle and housing base body can thus be created in the first place by joining the baffle with the housing base body. Producing such a baffle and such a housing base body is particularly simple especially by an injection moulding method, since neither the housing base body nor the baffle form undercuts, as a result of which demolding becomes easier.

According to the invention, the housing wall forms at least one convexity in the region of the at least one air guide element, so that the cross-sectional area of the air duct widens in the main flow direction. The at least one convexity in this case can likewise serve for steering the air and supporting the deflection of the air flow effected by the at least one air guide element. In particular, the at least one convexity of the housing wall can also contribute to direct the air flowing through the air duct in the direction of the at least one projection. In particular, multiple convexities can be provided, formed in particular by mutually opposite housing walls. In the region of the convexity, the housing wall can extend for example in an arc-shaped manner. This does not render the production of the air vent more difficult since the housing wall, located downstream, is not formed to be arc-shaped but because of the projection, angular in shape. At least in the case of the configuration with the baffle that can be joined to a housing base body, such an arc-shaped convexity can also be easily produced by injection moulding.

According to a configuration, the at least one convexity extends at an angle. The at least one convexity can thus likewise extend at an angle instead of in an arc-shaped manner, corresponding to the explained projection. The at least one convexity can thus be formed by two adjoining parts of the housing wall, wherein the two parts of the housing wall between them include an angle of for example 80° to 120°, preferably 90°. The air cushions mentioned at the outset can thus also form in the region of the at least one convexity, and result in a corresponding deflection of the air flow.

According to a configuration, the at least one air guide element is exactly one air guide element, in particular exactly one air guide slat. Consequently it can be a one-slat air vent. Here, the air guide element can extend through the air duct in particular over the entire length of the air vent as already explained above. The air routing via the at least one projection according to the invention is particularly advantageous especially with such a one-slat air vent, since in this case in the end position a reliable deflection of the air flow to the at least one projection can take place. This applies in particular to the case of two projections which are formed on mutually opposite housing walls, wherein an air deflection by the at least one air guide element to one of the projections can then take place in each of the two end positions.

According to a configuration, the at least one air guide element is at least one first air guide element which deflects the air flowing through the air duct from the main flow direction in a first direction extending perpendicularly to the main flow direction, where at least one second air guide element is provided upstream or downstream or above or below the first air guide element, to deflect the air flowing through the air duct from the main flow direction in a second direction at right angles to the first direction. Consequently, one or more second air guide elements can be provided on the one hand upstream or downstream of the at least one first air guide element for deflecting the air along another axis. One or more such second air guide elements can also be provided above or below the first air guide element, i.e. in the same flow position perpendicularly to the main flow direction offset relative to the first guide element. In the state of the air vent installed in a vehicle, the at least one second air guide element can deflect the air flowing through the air duct for example to the sides, while the at least one first air guide element can deflect the air upwards and downwards. The at least one second air guide element can be for example an air guide slat. In particular, multiple second air guide elements, for example air guide slats, can be provided, the movement of which can be synchronized for example via a coupling rod. Deflection in an axis extending perpendicularly to the main flow direction in this case is to mean that the air flow is subjected to a directional component in this perpendicular direction as mentioned above.

According to a configuration, the at least one air guide element is arranged at a distance out of the outlet opening which corresponds at least to the height of the air outlet opening. The at least one air guide element according to this configuration is arranged upstream of the outlet opening as far as the outlet opening is high. Here, the height of the air outlet opening describes in particular in the case of an air vent installed horizontally in the vehicle, the extent of the air outlet opening along the vertical. In the case of an air vent installed vertically in the vehicle, the height correspondingly describes the extent of the air outlet opening along the horizontal. Such an arrangement of the at least one air guide element is in particular preferred in the case of an elongated air vent explained above. By way of such an arrangement, the at least one air guide element is not or at least barely noticeable when looking through the outlet opening into the air duct. In particular, the movement of the at least one air guide element thus remains largely hidden. This is visually attractive.

According to a configuration, a baffle plate standing in the air flow is arranged downstream of the at least one air guide element. The baffle plate can be for example a substantially flat plate or a convexly or concavely curved plate. The baffle plate is arranged in particular adjoining the at least one air guide element. On the one hand, the baffle plate supports the air deflection of the air flow flowing through the air duct caused by the at least one air guide element. For the improved air deflection, the baffle plate can be in particular a convexly curved plate, the curvature of which is directed against the main flow direction. In addition to this, the baffle plate conceals the at least one air guide element at least partly, in particular completely so that when looking through the outlet opening into the air duct, the at least one air guide element is hardly noticeable or not at all. In particular, the baffle plate can follow a U-shaped course, wherein the curved foot of the baffle plate following a U-shaped course points against the main flow direction to the at least one air guide element and the legs of the baffle plate following a U-shaped course substantially extend in the main flow direction, preferably parallel to one another and/or to mutually opposite housing walls. When second air guide elements described above are provided downstream of the at least one first air guide element, these can be arranged in particular in each case on both sides between the legs of the baffle plate following a U-shaped course and the housing wall located opposite. Following a U-shaped course in this case means that an outer contour of the baffle plate has a U-shape. The baffle plate following a U-shaped course can here in principle be also closed on the side located opposite the curved foot. By way of this, a particularly efficient and effective steering of the air is achieved.

According to a configuration, the at least one air guide element is at least one air guide slat pivotably mounted in the housing relative to the air flow. For the pivotable mounting in the housing, the at least one air guide slat according to a further configuration can comprise a bearing shaft arranged on a slat end located downstream or on a slat end located upstream. In principle, the at least one air guide element however can also be mounted in the housing by way of a bearing shaft extending for example centrally through the air guide slat.

According to another configuration, the at least one air guide element is at least one air guide slat that is slidable perpendicularly to the main flow direction. According to this configuration, the air guide slat is not pivotable but slidable along at least one axis perpendicularly to the main flow direction. The air guide slat can also be designed to be slidable in a plane that is perpendicular to the main flow direction. A deflection of the air flow from the main flow direction in this case is effected by partially covering the flow cross section by the air guide slat. The slidable air guide slat can form for example a flat plate. Preferably, the air guide slat however can have a rounded shape, for example a convex curvature relative to the main flow direction. This means that the curvature of the convex air guide slat points against the main flow direction. This reduces the flow resistance relative to the plate shape.

According to a configuration, a decorative element is arranged on a slat end of the at least one air guide slat located downstream. The decorative element can be for example a chromium-plated element or an illumination. Here, the decorative element can be visible when looking through the outlet opening into the air duct. In particular, when the air guide slat is mounted by way of a bearing shaft arranged on the slat end located downstream, the air guide slat appears substantially unmoved even when pivoted about its bearing shaft. This is visually attractive. Accordingly, for example no baffle plate should be provided with this configuration so as not to conceal the slat end.

According to a further configuration, an operating strip extending in particular over the entire width of the outlet opening is provided in the region of the outlet opening with an operating element for adjusting the at least one air guide element. Here, the operating element can be mounted in particular centrally on the operating strip. The operating element can be connected to a pivot shaft extending along the operating strip, which on at least one end comprises a gear wheel which is in engagement with a gear wheel of the at least one air guide element. Thus, by pivoting the operating element about the pivot shaft, the at least one air guide element can be pivoted, in particular in the opposite direction. Alternatively to the operating strip, however, an operating element arranged outside the outlet opening can also be provided, for example an operating wheel. Furthermore, the operating element can be designed to be slidable on the pivot shaft or jointly with the same along the operating strip, wherein the shifting movement is translated into an adjusting movement of one or more of any second air guide elements that may be provided via a coupling mechanism.

### BRIEF DESCRIPTION OF THE DRAWINGS

Multiple configurations of the invention are explained in the following by way of figures.
FIG. 1 a perspective view of an air vent according to the invention in a first configuration,
FIG. 2 the air vent from Figure 1 without housing upper part,
FIG. 3 a sectional view through the air vent of Figure 1 along the main flow direction without second air guide elements,
FIG. 4 the air vent from Figure 2 with otherwise deflected air guide elements,
FIG. 5 the air vent from Figure 3 with first air guide element deflected as in Figure 4,
FIG. 6, 7 sectional views of an air vent according to the invention in accordance with a second configuration with and without baffle plate,
FIG. 8 a sectional view of an air vent according to the invention in accordance with a third configuration,
FIG. 9 a sectional view of an air vent according to the invention in accordance with a fourth configuration,
FIG. 10 an air vent according to the invention in accordance with a fifth configuration,
FIG. 11 an air vent in accordance with a sixth configuration (not part of the claimed invention),
FIGS. 12, 13 sectional views of an air vent according to the invention in accordance with a seventh configuration.

Unless otherwise indicated, same reference numbers relate to same objects in the following.

### DETAILED DESCRIPTION

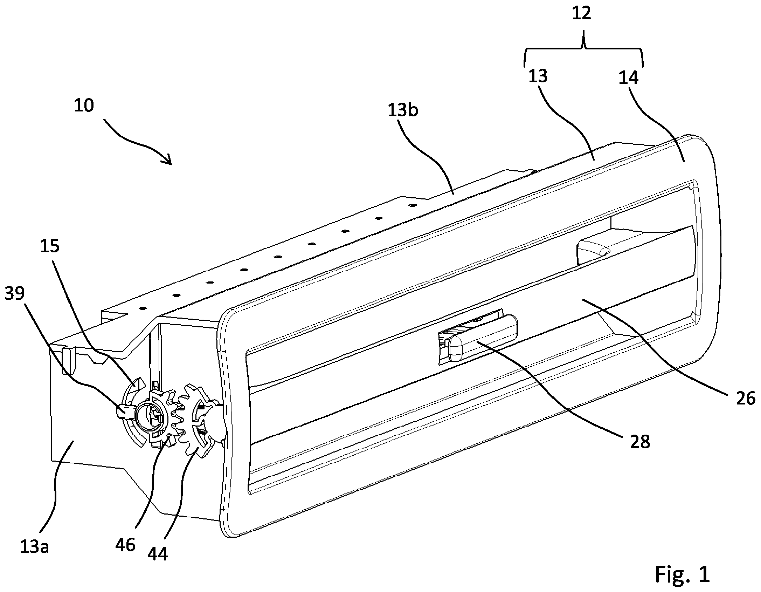

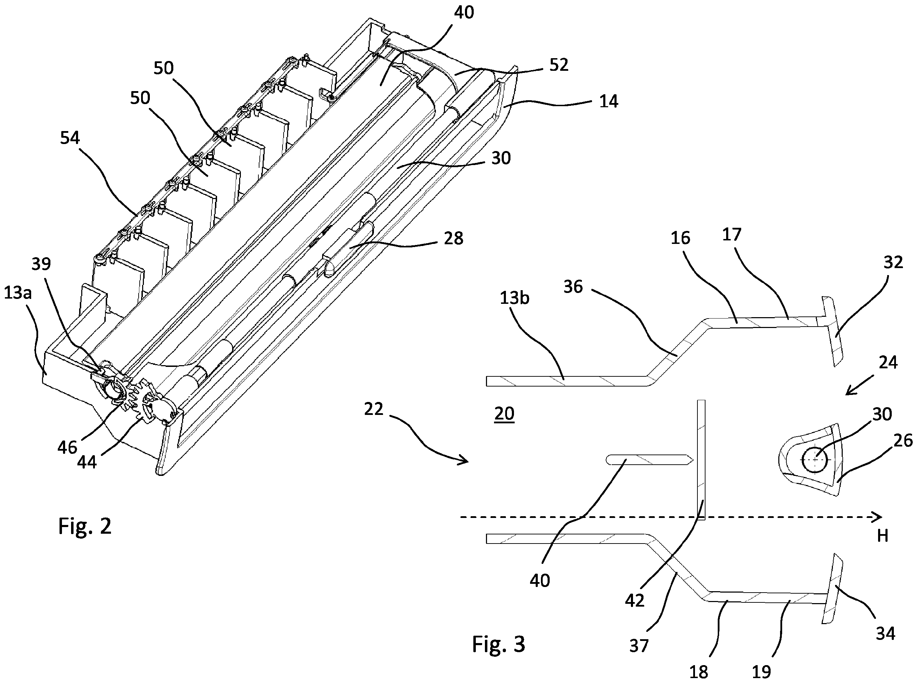

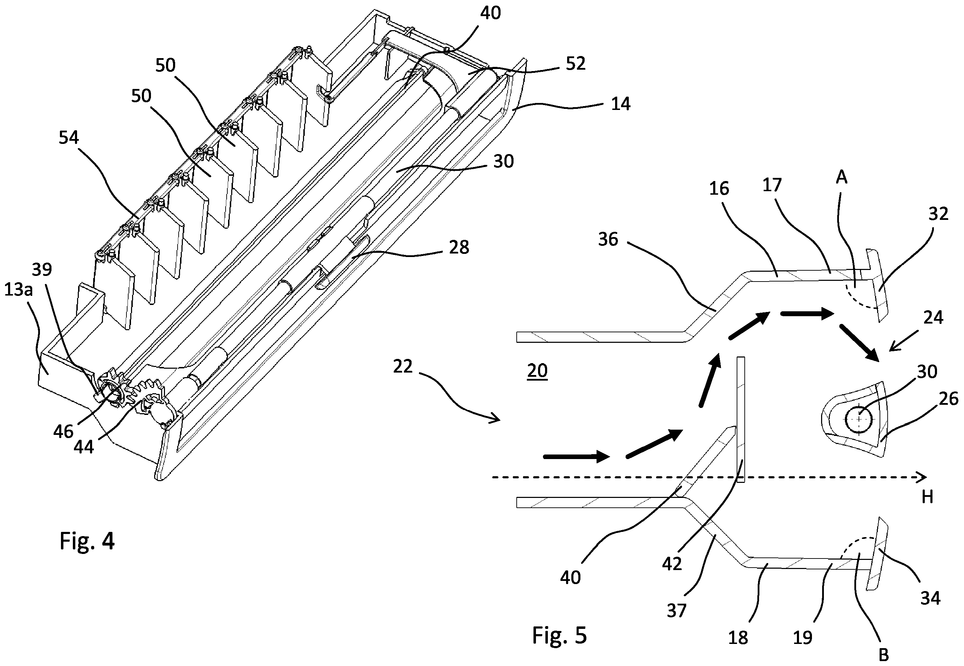

Figures 1 to 5 show an air vent 10 according to the invention in accordance with a first configuration. The air vent 10 comprises a housing 12 with a housing base body 13 and a baffle 14. In the present exemplary embodiment, the housing base body 13 is subdivided into a housing lower part 13a and a housing upper part 13b that is detachable from the housing lower part 13a. A housing wall 16 - belonging to the housing upper part 13b in this exemplary embodiment - and a housing wall 18 located opposite the housing wall 16, delimit an air duct 20 for air flowing from an inlet opening 22 to an outlet opening 24 along a main flow direction H. In the present exemplary embodiment, the outlet opening 24 is divided in two by an operating strip 26 extending over the entire width of the outlet opening 24. The operating strip 26 comprises an operating element 28 which, via a pivot shaft 30 extending within the operating strip 26, is in connection with a first air guide element 40 and multiple second air guide elements 50. Here, the first air guide element 40 and the second air guide element 50 are designed as pivotable air guide slats. The second air guide elements have been omitted in the sectional views of the Figures 3 and 5.

In the region of the outlet opening 24, the housing walls 16, 18 each form a projection 32 and 34 respectively projecting into the air duct 20 at an angle. It is noticeable that the cross-sectional area of the air duct 20 decreases in the main flow direction H by the converging projections 32, 34. Here, the projection 32 is formed on the baffle 14, namely by baffle sections extending away from one another at an angle A. Thus, the projection 32 also stands at the angle A relative to a part 17 of the housing wall 16 of the housing base body 13. The projection 34 is formed through the arrangement of the baffle 14 on the housing base body 13 and stands at an angle B relative to a part 19 of the housing wall 18 of the housing base body 13. Obviously, the baffle can also be configured in such a manner that both projections 32, 34 are formed at the angles A, B by arranging the baffle 14 on the housing base body 13. The angle A can be in particular identical to the angle B. Here, the angles are greater than 90°.

The air guide element 40 is pivotable between two end positions, of which one is shown in Figure 5. In this end position, the air guide element 40 deflects the air flowing through the air duct 20 along the main flow direction H in a direction perpendicular to the main flow direction H towards the top, as is evident from the black arrow lines. This deflection is additionally supported by a baffle plate 42 which is arranged fixed within the housing 12. Following this, the air flow strikes a convexity 36 of the housing wall 16 and flows in the direction of the projection 32. Thus, the air guide element 40 directs the air flowing through the air duct from the main flow direction H in the direction of the projection 32. Because of the air flow, an air cushion of air vortices forms in the angular region marked with the reference character A, which finally deflects the air flow to the outlet opening 24. Here, the air cushion functions similarly to a housing wall designed to be arc-shaped, wherein however because of the projections according to the invention a large deflection angle of the outflowing air and thus a more effective air deflection is achieved. However, the air vent according to the invention can be more easily produced precisely since no arc-shaped housing wall has to be formed. The air vent according to the invention can be produced for example by an injection moulding method from plastic, wherein the housing base body 13 and the baffle 14 can be produced separately and subsequently joined to one another. Here, the baffle plate 42 can also serve as visual protection and conceal the view through the outlet opening 24 on the air guide element 40. However, the operating strip 26 already contributes to this.

The position of the air guide element 40 shown in Figure 5 is also noticeable in Figure 4. Starting out from a neutral position shown in Figures 2 and 3, in which the air guide element 40 does not substantially impair the air flow, the air guide element 40 can be adjusted downwards into the position pointing upwards shown in Figures 4 and 5 by tilting the operating element 28 about its pivot shaft. Here, a gear wheel 44 arranged on the end side of the pivot shaft 30 outside the housing 12 meshes with a gear wheel 46, which is in engagement with a pin 39 of the air guide element 40. By tilting the operating element 28, the air guide element 40 is thus tilted about the axis of rotation of the gear wheel 46 in the opposite direction, wherein the pin 39 runs along in a C-shaped housing opening 15. The second air guide elements 50 are adjusted jointly with the pivot shaft 30 along the axis of the pivot shaft 30 by shifting the operating element 28. Here, a coupling mechanism 52 engages in one of the second air guide elements 50 which is pivoted in such a manner that an air deflection in the corresponding lateral direction takes place. The movement of the air guide elements 50 is coupled via a coupling rod 54.

The air guide element 40 can also be adjusted into a second end position which is not shown, in which the air flow is directed downwards from the main flow direction via a convexity 37 of the housing wall 18 to the projection 34. In the process, a corresponding air cushion forms in the angular region marked by the reference character B, which results in a deflection of the air flow in the direction of the lower half of the two-part outlet opening 24.

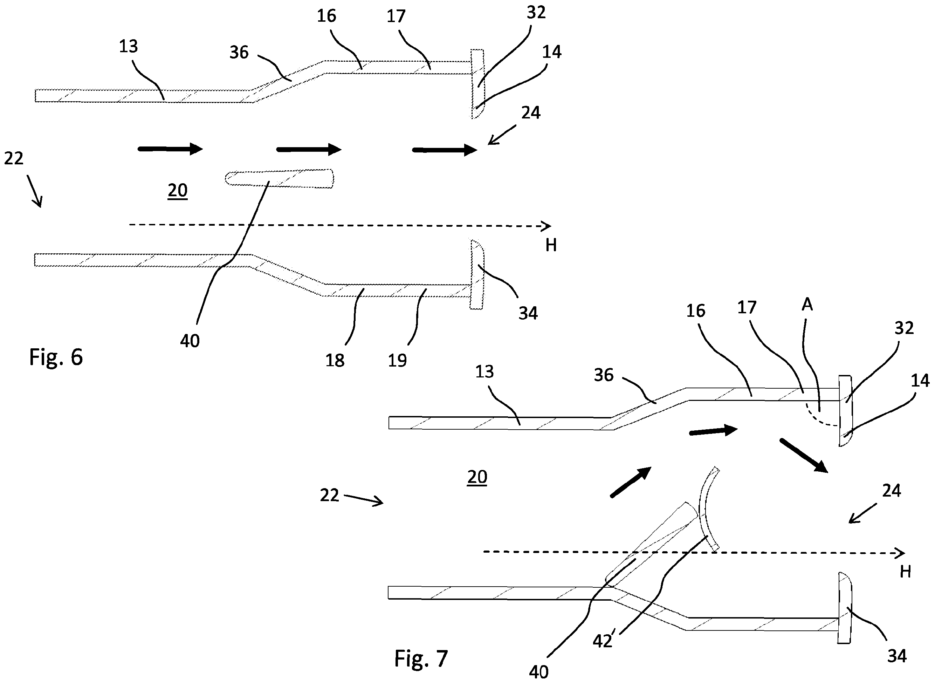

The air vents shown in Figures 6 to 13 differ from the air vents of Figures 1 to 5 in particular in that the housing base body 13 is produced in one piece. This can be carried out in particular by way of a (plastic) injection moulding method. Following this, the baffle 14 is joined to the housing base body 13, wherein the projections 32, 34 and the corresponding angles A, B are thereby formed between baffle 14 and the housing wall parts 17, 19 of the housing walls 16, 18, as explained above. The second air guide elements are not shown here.

The exemplary embodiment shown in Figures 6 and 7 differs from the first exemplary embodiment additionally in that no operating strip is present. In addition, the projections 32, 34 are each formed at a 90° angle relative to the housing wall part 17 and the housing wall part 19 respectively. The projections 32, 34 thus project into the air duct 20 at an angle of 90°. A concave baffle plate 42' is additionally provided in Figure 7, the curvature of which points in the direction of the air guide element 40. Here, the baffle plate 42' serves on the one hand for the supportive deflection of the air flow and on the other hand for concealing the air guide element 40. The air guide element 40 is thus hardly noticeable looking out of the outlet opening 24 into the air duct 20, which is visually attractive.

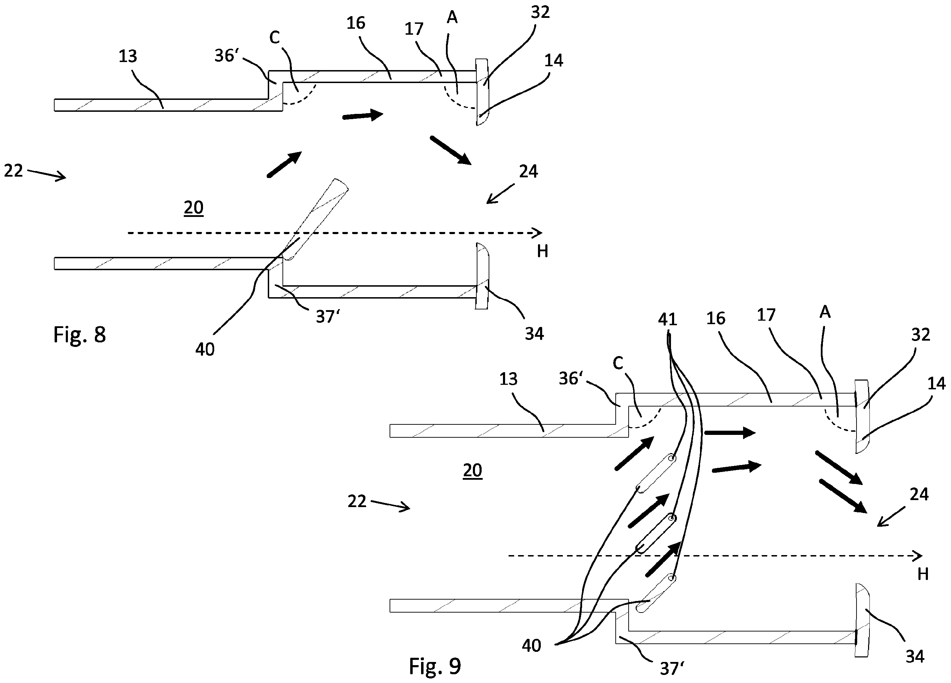

The configuration of the air vent according to the invention from Figure 8 differs from the previous configurations in particular in that the housing walls 16, 18 each have an angular convexity 36', 37' in the region of the air guide element 40. There, the housing walls thus extend step-wise. The angle in the housing wall 16 is marked with C in Figure 8. This means that the housing wall 16 or 18 has a step-like bend and the cross-sectional area of the air duct 20 expands in the main flow direction. An air flow as shown in Figure 8 can thus form an air cushion of air vortices also in the angular region C.

The configuration of the air vent according to the invention from Figure 9 differs from the previous configurations in that multiple first air guide elements 40 are provided. Here, the air guide elements 40 are each mounted on the housing by way of bearing shafts 41 arranged on slat ends located downstream.

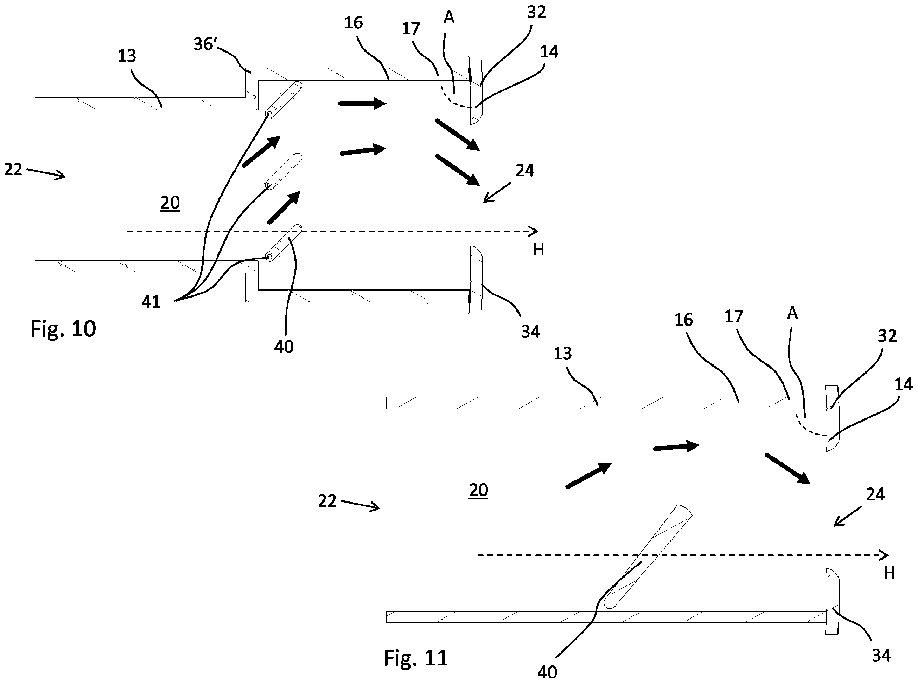

The configuration of the air vent according to the invention from Figure 10 differs from the configuration from Figure 9 in that the bearing shafts 41 of the air guide elements 40 are each arranged on slat ends located upstream.

Figure 11 shows a particularly simple embodiment of the air vent without a convexity of the housing walls 16, 18 in the region of the air guide element 40. This housing can basically be produced with a single injection mould. However, the formation of air cushions on the projections 32, 34 also takes place here in the manner according to the invention as already explained.

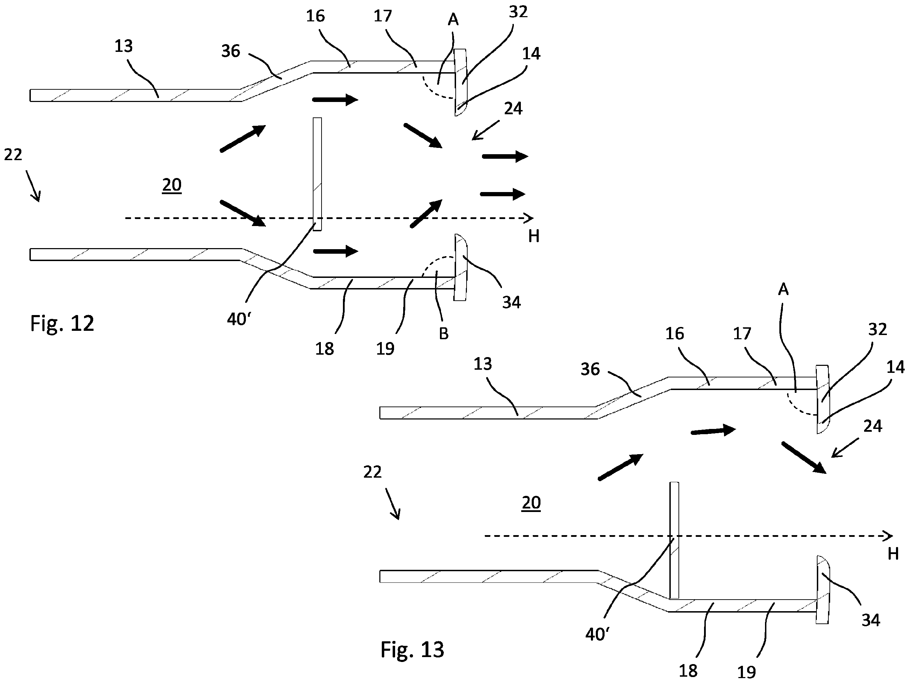

Figures 12 and 13 show a further exemplary embodiment of the air vent according to the invention, wherein as air guide element 40' no air guide slat that is pivotable about an axis but an air guide slat formed perpendicularly slidably relative to the main flow direction is provided here. In Figure 12, the air guide element 40' is shown in a neutral position. Here, the air flowing through the air duct 20 flows out of the outlet opening 24 along the main flow direction. Because of the shown air routing, air cushions can also form here in the angular regions A, B of the projections 32, 34. In Figure 13, the air guide element 40' is shown in an end position, in which the air guide element 40' deflects the air flowing through the air duct from the main flow direction H in the direction of the projection 32. Deviating from the flat plate shape shown here, the air guide element 40 can in particular have a rounded shape, for example a curvature that is convex against the main flow direction. This reduces the flow resistance compared with the plate shape.

### List of reference characters

- 10: Air vent
- 12: Housing
- 13: Housing base body
- 13a: Housing lower part
- 13b: Housing upper part
- 14: Baffle
- 15: Housing opening
- 16, 18: Housing walls
- 17, 19: Housing wall parts
- 20: Air duct
- 22: Inlet opening
- 24: Outlet opening
- 26: Operating strip
- 28: Operating element
- 30: Pivot shaft
- 32, 34: Projections
- 36, 37: Convexities
- 36', 37': Convexities
- 39: Pin
- 40, 40': First air guide elements
- 41: Bearing shafts
- 42, 42': Baffle plates
- 44: Gear wheel
- 46: Gear wheel
- 50: Second air guide elements
- H: Main flow direction
- A, B, C: Angle

## Claims

1. Air vent (10) for a vehicle, comprising a housing (12) with an inlet opening (22) and an outlet opening (24), a housing wall (16, 18) of the housing (12) delimiting an air duct (20) for air flowing from the inlet opening (22) to the outlet opening (24) along a main flow direction (H), further comprising at least one air guide element (40, 40') arranged in the air duct (20) upstream of the outlet opening (24), wherein the housing wall (16, 18) in the area of the outlet opening (24) forms at least one projection (32, 34) projecting into the air duct (20) so that the cross-sectional area of the air duct (20) decreases in the main flow direction (H), the at least one air guide element (40, 40') being adjustable between two end positions and, at least in one of the end positions, being configured to direct the air flowing through the air duct (20) from the main flow direction (H) in the direction of the at least one projection (32, 34), **characterized in that** the at least one projection (32, 34) forms a first part of the housing wall (16, 18), which is arranged at an angle (A, B) of 40° to 120°, preferably 60° to 100°, particularly preferably 90°, relative to a second part of the housing wall (16, 18) adjoining the first part upstream, and the housing wall (16, 18) in the area of the at least one air guide element (40, 40') forms at least one convexity (36, 36', 37, 37'), so that the cross-sectional area of the air duct (20) widens in the main flow direction (H), wherein the at least one convexity (36, 36', 37, 37') is configured to support the deflection of the air flow effected by the at least one air guide element (40, 40') so as to contribute to direct the air flowing through the air duct (20) in the direction of the at least one projection (32, 34).

2. Air vent (10) according to claim 1,
wherein the air duct (20) has a rectangular cross-sectional area, mutually opposite housing walls (16, 18) delimiting the air duct (20) in the area of the outlet opening (24) each forming a projection (32, 34) projecting into the air duct (20) at the angle (A, B).

3. Air vent (10) according to claim 1 or 2,
wherein the at least one projection (32, 34) is formed by a baffle (14) delimiting the outlet opening (24).

4. Air vent (10) according to one of claims 1 to 3,
wherein the at least one convexity (36', 37') is formed by two adjoining parts of the housing wall (16, 18), wherein the two parts of the housing wall (16, 18) between them include an angle (C).

5. Air vent (10) according to one of the preceding claims,
wherein the at least one air guide element (40, 40') is exactly one air guide element (40, 40'), in particular exactly one air guide slat.

6. Air vent (10) according to one of claims 1 to 4,
wherein the at least one air guide element is at least one first air guide element (40, 40'), which is configured to deflect the air flowing through the air duct (20) from the main flow direction (H) in a first direction extending at right angles to the main flow direction (H), at least one second air guide element (50) being provided upstream or downstream or above or below the first air guide element (40, 40') to deflect the air flowing through the air duct from the main flow direction (H) in a second direction at right angles to the first direction.

7. Air vent (10) according to one of the preceding claims, wherein the at least one air guide element (40, 40') is arranged at a distance from the outlet opening (24) which corresponds at least to the height of the air outlet opening (24).

8. Air vent (10) according to one of the preceding claims, wherein a baffle plate (42, 42') standing in the air stream is arranged downstream of the at least one air guide element (40, 40').

9. Air vent (10) according to one of the preceding claims, wherein the at least one air guide element is at least one air guide slat (40) mounted in the housing (12) such that it can be pivoted relative to the air stream.

10. Air vent (10) according to claim 9,
wherein for the pivotable mounting in the housing (12), the at least one air guide slat (40) has a bearing shaft (41) arranged at an air guide slat end located downstream or at an air guide slat end located upstream.

11. Air vent (10) according to one of claims 1 to 8,
wherein the at least one air guide element is at least one air guide slat (40') that can be displaced at right angles to the main flow direction (H).

12. Air vent (10) according to claim 9 or 10,
wherein a decorative element is arranged at an upstream air guide slat end of the at least one air guide slat (40).

13. Air vent (10) according to one of the preceding claims,
wherein an operating strip (26) extending in particular over the entire width of the outlet opening (24) and having an operating element (28) for adjusting the at least one air guide element (40, 40') is provided in the area of the outlet opening (24).

## Patentansprüche

1. Lüftungseinrichtung (10) für ein Fahrzeug, aufweisend ein Gehäuse (12) mit einer Einlassöffnung (22) und einer Auslassöffnung (24), wobei eine
Gehäusewand (16, 18) des Gehäuses (12) einen Luftkanal (20) für von der Einlassöffnung (22) zu der Auslassöffnung (24) entlang einer Hauptströmungsrichtung (H) strömende Luft begrenzt, ferner aufweisend zumindest ein Luftleitelement (40, 40'), das in dem Luftkanal (20) stromaufwärts der Auslassöffnung (24) angeordnet ist, wobei die Gehäusewand (16, 18) in dem Bereich der Auslassöffnung (24) zumindest einen in den Luftkanal (20) vorstehenden Vorsprung (32, 34) bildet, sodass die Querschnittsfläche des Luftkanals (20) in der Hauptströmungsrichtung (H) abnimmt, wobei das zumindest eine Luftleitelement (40, 40') zwischen zwei Endstellungen verstellbar ist und zumindest in einer der Endstellungen zum Leiten der durch den Luftkanal (20) strömenden Luft aus der Hauptströmungsrichtung (H) in Richtung des zumindest einen Vorsprungs (32, 34) konfiguriert ist, **dadurch gekennzeichnet, dass** der zumindest eine Vorsprung (32, 34) einen ersten Teil der Gehäusewand (16, 18) bildet, der in einem Winkel (A, B) von 40° bis 120°, bevorzugt 60° bis 100°, besonders bevorzugt 90°, relativ zu einem zweiten Teil der Gehäusewand (16, 18) angeordnet ist, der stromaufwärts an den ersten Teil angrenzt, und
die Gehäusewand (16, 18) in dem Bereich des zumindest einen Luftleitelements (40, 40') zumindest eine
Wölbung (36, 36', 37, 37') bildet, sodass sich die Querschnittsfläche des Luftkanals (20) in der Hauptströmungsrichtung (H) erweitert, wobei die zumindest eine Wölbung (36, 36', 37, 37') zum Unterstützen der Ablenkung des Luftstroms konfiguriert ist, die durch das zumindest eine Luftleitelement (40, 40') bewirkt wird, um dazu beizutragen, die durch den Luftkanal (20) strömende Luft in die Richtung des zumindest einen Vorsprungs (32, 34) zu leiten.

2. Lüftungseinrichtung (10) nach Anspruch 1,
wobei der Luftkanal (20) eine rechteckige Querschnittsfläche aufweist, wobei einander gegenüberliegende Gehäusewände (16, 18), die den Luftkanal (20) in dem Bereich der Auslassöffnung (24) begrenzen, jeweils einen Vorsprung (32, 34) bilden, der unter dem Winkel (A, B) in den Luftkanal (20) vorsteht.

3. Lüftungseinrichtung (10) nach Anspruch 1 oder 2,
wobei der zumindest eine Vorsprung (32, 34) durch ein die Auslassöffnung (24) begrenzendes Ablenkblech (14) gebildet ist.

4. Lüftungseinrichtung (10) nach einem der Ansprüche 1 bis 3, wobei die zumindest eine Wölbung (36', 37') durch zwei aneinandergrenzende Teile der Gehäusewand (16, 18) gebildet ist, wobei die beiden Teile der Gehäusewand (16, 18) zwischen sich einen Winkel (C) einschließen.

5. Lüftungseinrichtung (10) nach einem der vorhergehenden Ansprüche,
wobei das zumindest eine Luftleitelement (40, 40') genau ein Luftleitelement (40, 40'), insbesondere genau eine Luftleitlamelle, ist.

6. Lüftungseinrichtung (10) nach einem der Ansprüche 1 bis 4, wobei das zumindest eine Luftleitelement zumindest ein erstes Luftleitelement (40, 40') ist, das zum Ablenken der durch den Luftkanal (20) strömenden Luft aus der Hauptströmungsrichtung (H) in eine erste Richtung konfiguriert ist, die sich rechtwinklig zu der Hauptströmungsrichtung (H) erstreckt, zumindest ein zweites Luftleitelement (50) stromaufwärts oder stromabwärts oder oberhalb oder unterhalb des ersten
Luftleitelements (40, 40') vorgesehen ist, um die durch den Luftkanal strömende Luft aus der Hauptströmungsrichtung (H) in eine zweite Richtung rechtwinklig zu der ersten Richtung abzulenken.

7. Lüftungseinrichtung (10) nach einem der vorhergehenden Ansprüche,
wobei das zumindest eine Luftleitelement (40, 40') in einem Abstand von der Auslassöffnung (24) angeordnet ist, der zumindest der Höhe der Luftauslassöffnung (24) entspricht.

8. Lüftungseinrichtung (10) nach einem der vorhergehenden Ansprüche,
wobei stromabwärts des zumindest einen
Luftleitelements (40, 40') ein in dem Luftstrom stehendes Ablenkblech (42, 42') angeordnet ist.

9. Lüftungseinrichtung (10) nach einem der vorhergehenden Ansprüche,
wobei das zumindest eine Luftleitelement zumindest eine Luftleitlamelle (40) ist, die in dem Gehäuse (12) montiert ist, sodass sie relativ zu dem Luftstrom schwenkbar ist.

10. Lüftungseinrichtung (10) nach Anspruch 9,
wobei die zumindest eine Luftleitlamelle (40) für die schwenkbare Lagerung in dem Gehäuse (12) eine Lagerwelle (41) aufweist, die an einem stromabwärts gelegenen Luftleitlamellenende oder an einem stromaufwärts gelegenen Luftleitlamellenende angeordnet ist.

11. Lüftungseinrichtung (10) nach einem der Ansprüche 1 bis 8, wobei das zumindest eine Luftleitelement zumindest eine Luftleitlamelle (40') ist, die rechtwinklig zu der Hauptströmungsrichtung (H) verschoben werden kann.

12. Lüftungseinrichtung (10) nach Anspruch 9 oder 10,
wobei ein dekoratives Element an einem stromaufwärts gelegenen Luftleitlamellenende der zumindest einen Luftleitlamelle (40) angeordnet ist.

13. Lüftungseinrichtung (10) nach einem der vorhergehenden Ansprüche,
wobei in dem Bereich der Auslassöffnung (24) eine sich insbesondere über die gesamte Breite der Auslassöffnung (24) erstreckende Betätigungsleiste (26), die ein Betätigungselement (28) zum Verstellen des zumindest einen Luftleitelements (40, 40') aufweist, vorgesehen ist.

## Revendications

1. Bouche d'aération (10) pour véhicule, comprenant un boîtier (12) ayant une ouverture d'entrée (22)
et une ouverture de sortie (24), une paroi de boîtier (16, 18) du boîtier (12) délimitant un conduit d'air (20) pour l'écoulement d'air de l'ouverture d'entrée (22) vers l'ouverture de sortie (24) le long d'une direction d'écoulement principale (H), comprenant en outre au moins un élément de guidage d'air (40, 40') agencé dans le conduit d'air (20) en amont de l'ouverture de sortie (24), dans laquelle la paroi de boîtier (16, 18) dans la zone de l'ouverture de sortie (24) forme au moins une saillie (32, 34) faisant saillie dans le conduit d'air (20) de sorte que la zone de section transversale du conduit d'air (20) diminue dans la direction d'écoulement principale (H), l'au moins un élément de guidage d'air (40, 40') étant réglable entre deux positions d'extrémité et, au moins dans une parmi les positions d'extrémité, étant configuré pour diriger l'écoulement d'air à travers le conduit d'air (20) depuis la direction d'écoulement principale (H) dans la direction de l'au moins une saillie (32, 34), **caractérisé en ce que** l'au moins une saillie (32, 34) forme une première partie de la paroi de boîtier (16, 18), qui est agencée à un angle (A, B) de 40° à 120°, de préférence de 60° à 100°, particulièrement préférablement 90°, par rapport à une deuxième partie de la paroi de boîtier (16,18) adjacente à la première partie en amont, et
la paroi de boîtier (16, 18) dans la zone d'au moins un élément de guidage d'air (40, 40') forme au moins une convexité (36, 36', 37, 37'), de sorte que la zone de section transversale du conduit d'air (20) s'élargit dans la direction d'écoulement principale (H), dans laquelle l'au moins une convexité (36, 36', 37, 37') est configurée pour supporter la déviation du flux d'air produite par l'au moins un élément de guidage d'air (40, 40') de manière à contribuer à diriger l'écoulement d'air à travers le conduit d'air (20) en direction de l'au moins une saillie (32, 34).

2. Bouche d'aération (10) selon la revendication 1,
dans laquelle le conduit d'air (20) a une section transversale rectangulaire, des parois de boîtier mutuellement opposées (16, 18) délimitant le conduit d'air (20) dans la zone de l'ouverture de sortie (24) formant chacune une saillie (32, 34) faisant saillie dans le conduit d'air (20) à l'angle (A, B).

3. Bouche d'aération (10) selon la revendication 1 ou 2,
dans laquelle l'au moins une saillie (32, 34) est formée par un déflecteur (14) délimitant l'ouverture de sortie (24).

4. Bouche d'aération (10) selon l'une quelconque des revendications 1 à 3,
dans lequel l'au moins une convexité (36', 37') est formée par deux parties adjacentes de la paroi de boîtier (16, 18), dans laquelle les deux parties de la paroi de boîtier (16, 18) comprennent un angle (C) entre elles.

5. Bouche d'aération (10) selon l'une quelconque des revendications précédentes, dans laquelle l'au moins un élément de guidage d'air (40, 40') est exactement un élément de guidage d'air (40, 40'), en particulier exactement une lamelle de guidage d'air.

6. Bouche d'aération (10) selon l'une quelconque des revendications 1 à 4,
dans laquelle l'au moins un élément de guidage d'air est au moins un premier élément de guidage d'air (40, 40'), qui est configuré pour dévier l'écoulement d'air à travers le conduit d'air (20) depuis la direction d'écoulement principale (H) dans une première direction s'étendant à angle droit par rapport à la direction d'écoulement principale (H), au moins un deuxième élément de guidage d'air (50) étant fourni en amont ou en aval ou au-dessus ou en dessous du premier élément de guidage d'air (40, 40') pour dévier l'écoulement d'air à travers le conduit d'air à partir de la direction d'écoulement principale (H) dans une deuxième direction à angle droit par rapport à la première direction.

7. Bouche d'aération (10) selon l'une quelconque des revendications précédentes,
dans laquelle l'au moins un élément de guidage d'air (40, 40') est agencé à une distance de l'ouverture de sortie (24) qui correspond au moins à la hauteur de l'ouverture de sortie d'air (24).

8. Bouche d'aération (10) selon l'une quelconque des revendications précédentes,
dans laquelle une plaque de déflecteur (42, 42') se trouvant dans le flux d'air est agencée en aval de l'au moins un élément de guidage d'air (40, 40').

9. Bouche d'aération (10) selon l'une quelconque des revendications précédentes,
dans laquelle l'au moins un élément de guidage d'air est au moins une lame de guidage d'air (40) montée dans le boîtier (12) de sorte qu'elle peut être pivotée par rapport au flux d'air.

10. Bouche d'aération (10) selon la revendication 9,
dans laquelle, pour le montage pivotant dans le boîtier (12), l'au moins une lame de guidage d'air (40) a un arbre de palier (41) agencé à une extrémité de lame de guidage d'air située en aval ou à une extrémité de lame de guidage d'air située en amont.

11. Bouche d'aération (10) selon l'une quelconque des revendications 1 à 8,
dans laquelle l'au moins un élément de guidage d'air est au moins une lame de guidage d'air (40') qui peut être déplacée à angle droit par rapport à la direction d'écoulement principale (H).

12. Bouche d'aération (10) selon la revendication 9 ou 10,
dans laquelle un élément décoratif est agencé sur une extrémité de lame de guidage d'air amont de l'au moins une lame de guidage d'air (40).

13. Bouche d'aération (10) selon l'une quelconque des revendications précédentes,
dans laquelle une baguette de commande (26) s'étendant en particulier sur toute la largeur de l'ouverture de sortie (24) et ayant un élément de commande (28) pour le réglage de l'au moins un élément de guidage d'air (40, 40') est fournie dans la zone de l'ouverture de sortie (24).
